# EUROPÄISCHE PATENTSCHRIFT

(11) **EP 0 813 552 B1**
(45) Veröffentlichungstag und Bekanntmachung des Hinweises auf die Patenterteilung: **23.12.1998**
(21) Anmeldenummer: 96904741.4
(22) Anmeldetag: 06.03.1996
(51) Int. Cl.: C08F 8/14, C09D 133/06, C09D 163/00

(54) **MODIFIZIERTES ACRYLCOPOLYMERISAT**
MODIFIED ACRYL COPOLYMER
COPOLYMERE ACRYLE MODIFIE

(30) Priorität: 10.03.1995 DE 19508544
(43) Veröffentlichungstag der Anmeldung: 29.12.1997
(73) Patentinhaber: Bollig & Kemper GmbH & Co. KG, 50827 Köln (DE)
(72) Erfinder: NEIS, Stephan, D-50259 Pulheim (DE); MASONNE, Matthias, D-50859 Köln (DE)
(74) Vertreter: Schmitz, Diethelm
(86) Internationale Anmeldenummer: DE9600393
(87) Internationale Veröffentlichungsnummer: WO9628478

(56) Entgegenhaltungen:
- EP-A- 0 355 892
- EP-A- 0 652 263
- WO-A-87/02041

## Beschreibung

Die Erfindung betrifft ein modifiziertes Acrylcopolymerisat sowie dessen Verwendung für Lacke mit erhöhtem Glanz.

Oberstes Ziel der Lackhersteller ist ein dekorativ ansprechender, hochglänzender Lack, der gleichzeitig dem zu lackierenden Substrat eine Schutzfunktion bietet. Besonders hoch sind diese Anforderungen in der Automobilindustrie. Eine Erhöhung des Glanzes wurde bisher durch Zusatz von Glanzadditiven oder auch Verlaufadditiven erreicht. Diese Additive haben aber den Nachteil, daß sie an der Oberfläche ausschwitzen und zu einer erheblichen Beeinträchtigung der Überlackierbarkeit infolge eines Haftungsverlustes führen. Auch haben diese herkömmlichen Lacke eine schlechte Schwitzwasserlagerung und ungenügende Chemikalienbeständigkeit.

Die Aufgabe der vorliegenden Erfindung ist es, ein derartig modifiziertes Acrylcopolymerisat bereitzustellen, das beispielsweise zur Herstellung von Überzugsmassen verwendet werden kann, die sich im Vergleich mit entsprechenden, aus nicht modifizierten Acrylcopolymerisaten hergestellten Überzugsmassen durch erhöhten Glanz und erhöhte Chemikalienbeständigkeit sowie eine dem Anforderungsprofil für Klarlacke in der Automobilindustrie entsprechende Wetterbeständigkeit auszeichnen.

Solche Überzugsmassen finden insbesondere als Klarlacke oder lasierende Decklacke in der Automobilindustrie Verwendung.

Diese Aufgabe wird erfindungsgemäß durch ein Acrylcopolymerisat gelöst, das durch Modifizierung eines epoxidgruppenhaltigen Copolymerisats durch einen eine Carboxylgruppe enthaltenden polycycloaliphatischen Stoff mit mindestens zwei Cyclen, insbesondere mit mindestens drei Cyclen, und mit einem Brechungsindex bei 20 °C von mindestens 1,460 erhältlich ist. Unter einem eine Carboxylgruppe enthaltenden polycycloaliphatischen Stoff wird in der vorliegenden Erfindung ein Stoff oder eine Verbindung verstanden, der eine polycarbocyclische Struktur oder Teilstruktur aufweist, d.h., daß die Cyclen nur Carbocyclen sind.
Besonders geeignete polycycloaliphatische Verbindung können tricycloaliphatische Monocarbonsäuren aus der Gruppe von hydrierten Naturharzsäuren, z.B. Handelsprodukte wie "Foral AX-E" von der Firma Hercules BV; Adamantancarbonsäuren; und tricyclischen Monocarbonsäuren, die sich vom Dicyclopentadien ableiten, wie z.B. Tricyclodecan-Derivate mit einer Carboxylgruppe (TCD-Carbonsäuren), insbesondere Tricyclo[5.2.1.0.^{2,6}]-decan-8-carbonsäure; vorzugsweise Tetrahydroabietinsäure, sein.

Hinsichtlich des Zusammenhangs des Brechungsindex und Glanz sei auf den Artikel von Juergen H. Braun in JOURNAL OF COATINGS TECHNOLOGY, Vol. 63, No. 799, August 1991 verwiesen.
In bezug auf den Zusammenhang von Brechungsindex und Temperatur wird auf das Organikum, Autorenkollektiv VEB Deutscher Verlag der Wissenschaften, 16. Auflage, Berlin 1986, S. 76 f. verwiesen.

Für Stoffe, die bei 20 °C nicht flüssig sind, kann der Brechungsindex bei erhöhter Temperatur mittels thermostatisiertem Abbé-Refraktometer mit dem Licht der Natrium-D-Linie λ = 589 nm bestimmt werden. Als Inkrement für die Temperaturkorrektur gilt: Addition von 5^{·}10⁻⁴ Einheiten pro °C

In einer weiteren erfindungsgemäßen Ausführungsform liegt das Molverhältnis von Carboxylgruppe zu Epoxidgruppe zwischen 0,5 bis 1,0, vorzugsweise zwischen 0,8 und 1,0.

Die modifizierten Acrylcopolymerisate können erhalten werden durch Umsetzung eines epoxidgruppenhaltigen Acrylcopolymerisats mit mehr als einer Epoxidgruppe pro Durchschnittsmolekulargewicht mit den Modifizierungsmitteln bei erhöhter Temperatur, z.B. 60 bis 200 °C, vorzugsweise 120 bis 170 °C. Die Umsetzung kann in der Schmelze oder in Gegenwart von organischen Lösungsmitteln, wie sie üblicherweise bei der Lack- bzw. Lackkunstharzherstellung verwendet werden, z.B. Alkoholen, z.B. Methoxypropanol, Butanol, aromatischen Kohlenwasserstoffen, z.B. Xylol, Erdöldestillaten auf der Basis von Alkylbenzolen, Estern, z.B. Butylacetat, Methoxypropylacetat, Ketonen, z.B. Butanon, Methylisobutylketon, bzw. deren Gemischen, durchgeführt werden. Dabei können gegebenenfalls übliche Katalysatoren für die Katalysierung der Epoxy/Carboxy-Reaktion, z.B. Alkalimetallhydroxide, z.B. Lithiumhydroxidmonohydrat, tertiäre Amine, z.B. Triethylamin, N,N-Benzylmethylamin, Triethylbenzylammoniumchlorid, Benzyltrimethylammoniumhydroxid, auch Gemische verschiedener Katalysatoren, im allgemeinen in einer Menge von 0,1 bis 2 Gew.-%, bezogen auf die Gesamtmenge der Komponenten, eingesetzt werden. Werden die Umsetzungen bei höherer Temperatur, z.B. 150 bis 170°C, durchgeführt, kann im allgemeinen auf Katalysatoren verzichtet werden. Die beanspruchten Modifizierungsmittel können dem epoxidgruppenhaltigen Acrylcopolymerisat bereits vor der Umsetzungstemperatur zugefügt oder bei der Umsetzungstemperatur portionsweise nach und nach oder kontinuierlich unter Berücksichtigung der exothermen Reaktion zugefügt werden, auch in Form von Lösungen, z.B. in organischen Lösungsmitteln, soweit Löslichkeit oder stabile Dispergierbarkeit darin besteht. Die Menge an den beanspruchten Modifizierungsmitteln wird, wie bereits ausgeführt, so gewählt, daß das Verhältnis der Epoxidgruppen: Carboxylgruppen 1:0,5 bis 1:1 beträgt und richtet sich vor allem nach dem Verwendungszweck bzw. der Anwendung des Klarlackes bzw. des lasierenden Decklackes. Die Umsetzung wird im allgemeinen beendet, sobald die Säurezahl unter 20 gefallen ist und vorzugsweise 0 bis 10 beträgt; es können jedoch auch modifizierte Acrylcopolymerisate mit höherer Säurezahl, z.B. 25 bis 50, hergestellt werden.

Bei den vorzugsweise erfindungsmäß zu verwendenden nichtwäßrigen bzw. lösungsmittelverdünnbaren Klarlacken bzw. lasierenden Decklacken enthalten diese ein modifiziertes Acrylcopolymerisat, das durch Umsetzung eines epoxidgruppenhaltigen Acrylcopolymerisates mit mehr als einer Epoxidgruppe pro durchschnittlichem Molekulargewicht, vorzugsweise mit einem Epoxidwert von 0,1 bis 0,5, und den Modifizierungsmitteln bei Temperaturen über 60 °C hergestellt wurde, wobei das Verhältnis der Carboxylgruppe zu Epoxidgruppen vorzugsweise 0,5:1 bis 1:1, insbesondere 0,8:1 bis 1:1 beträgt.
Das Durchschnittsmolekulargewicht der modifizierten Acrylcopolymerisate kann innerhalb weiter Grenzen schwanken und beträgt vorzugsweise 1.000 bis 10.000, insbesondere 1.500 bis 5.000. Der Hydroxylgehalt beträgt 1 bis 10 Gew.-% vorzugsweise 2 bis 5 Gew.-%. Die Säurezahl liegt unter 50, vorzugsweise unter 20, und beträgt insbesondere 0 bis 10. Die modifizierten Acrylcopolymerisate können auch noch freie Epoxidgruppen enthalten, da das Verhältnis von Carboxylgruppe zu Epoxidgruppen 0,5:1 bis 1:1 bei der Herstellung der modifizierten Acrylcopolymerisate beträgt.

Eine besondere Ausgestaltung der Erfindung ist ein modifiziertes Acrylcopolymerisat, wobei das Molverhältnis von Carboxylgruppe zu Epoxidgruppe zwischen 0,8 bis 1,0, vorzugsweise zwischen 0,9 und 1,0, liegt.
So kann dieses Acrylcopolymerisat gemäß einer weiteren Ausführungsform der Erfindung bei erhöhter Temperatur mit Polycarbonsäuren und/oder deren Anhydriden unter Halbesterbildung weiter umgesetzt werden.
Dieses Reaktionsprodukt, d.h. das Produkt aus modifiziertem Acrylpolymerisat und Polycarbonsäuren oder deren Anhydriden, kann eine Säurezahl aufweisen, die ausreichend ist, um das Reaktionsprodukt nach Neutralisation wasserverdünnbar zu machen.
Das genannte wasserverdünnbare Reaktionsprodukt kann beispielsweise durch Neutralisation mit Basen, vorzugsweise tertiären Aminen, erhalten worden sein.

Bei erfindungsgemäß zu verwendenden wäßrigen Klarlacken bzw. lasierenden Decklacken, die das modifizierte Acrylcopolymerisat enthalten, beträgt das Verhältnis von Carboxylgruppe zu Epoxidgruppen bei der Herstellung der modifizierten Acrylcopolymerisate vorzugsweise 0,8:1 bis 1:1, insbesondere 0,9:1 bis 1:1, und die Säurezahl 15 bis 50, insbesondere 25 bis 40. Vorzugsweise wird jedoch so verfahren, daß das modifizierte Acrylcopolymerisat mit einer Säurezahl von unter 20, insbesondere von 0 bis 10, anschließend nach der Herstellung mit Polycarbonsäureanhydriden, z.B. Maleinsäureanhydrid, Hexahydrophthalsäureanhydrid, Tetrahydrophthalsäureanhydrid, Trimellithsäureanhydrid, unter Halbesterbildung ohne Wasserabspaltung bei erhöhter Temperatur, z.B. 60 bis 160 °C, umgesetzt wird, so daß eine Säurezahl resultiert, die ausreichend ist, dieses zusätzlich modifizierte Acrylcopolymerisat nach Neutralisation mit Basen, vorzugsweise tertiäre Amine, z.B. Dimethylaminoethanol, wasserverdünnbar zu machen, vorzugsweise bei einer Säurezahl von 25 bis 40.

Bei wäßrigen Klarlacken bzw. lasierenden Decklacken enthalten diese ein modifiziertes Acrylcopolymerisat, bei dessen Herstellung von lösungsmittelfreien epoxidgruppenhaltigen Acrylcopolymerisaten oder von durch Lösungspolymerisation hergestellten epoxidgruppenhaltigen Acrylcopolymerisaten ausgegangen wurde, wobei vorzugsweise wassermischbare oder mit Wasser ein Azeotrop bildende Lösungsmittel eingesetzt werden, die sich nach der Umsetzung der epoxidgruppenhaltigen Acrylcopolymerisate mit den beanspruchten Modifizierungsmitteln und gegebenenfalls anschließender Umsetzung mit Polycarbonsäureanhydriden und ganz oder teilweiser Neutralisation mit Basen, vorzugsweise tertiäre Amine, sowie Verdünnen mit Wasser, ganz oder teilweise entfernen lassen, z.B. durch an sich bekanntes Auskreisen, vorzugsweise durch Vakuumdestillation.

Ein so modifiziertes Acrylpolymerisat findet vor allem zur Herstellung von wasserverdünnbaren Klarlacken oder lasierenden Decklacken, vorzugsweise in der Automobilindustrie Verwendung.

In einer besonderen erfindungsgemäßen Form kann der eine Carboxylgruppe enthaltende polycycloaliphatische Stoff einen Brechungsindex bei 20 °C von mindestens 1,480 haben.
Der eine Carboxylgruppe enthaltende polycycloaliphatische Stoff kann beispielsweise aber auch ein Reaktionsprodukt aus mindestens zwei Verbindungen sein, von denen mindestens eine eine polycycloaliphatische Verbindung mit einen Brechungsindex bei 20 °C von mindestens 1,460, vorzugsweise von mindestens 1,480, ist.
Insbesondere kann mindestens eine der polycycloaliphatischen Verbindungen, die einen Brechungsindex bei 20 °C von mindestens 1,460 bzw. 1,480 hat, mindestens zu 10 Gew.-%, vorzugsweise zu mindestens 20 Gew.-%, und insbesondere zu mindestens zu 50 Gew.-%, in dem eine Carboxylgruppe enthaltenden Reaktionsprodukt enthalten sein.

Der eine Carboxylgruppe enthaltende polycycloaliphatische Stoff kann in einer weiteren Ausführungsform der Erfindung ein Reaktionsprodukt eines oder mehrerer Alkohole mit mindestens einer Dicarbonsäure und/oder deren Anhydriden sein, wobei entweder der Alkohol oder die Dicarbonsäure bzw. deren Anhydride eine polycycloaliphatische Verbindung ist. Wenn der Alkohol die polycycloaliphatische Verbindung ist,
beispielsweise ein tricycloaliphatischer Monoalkohol aus der Gruppe der perhydrierten Naturharze wie Perhydroabietylalkohol; der Dicyclopentadien-Derivate, wie beispielsweise die TCD-Alkohole 8-Hydroxytricyclo[5.2.1.0^{2,6}]decan, 8-Hydroxymethyltricyclo[5.2.1.0^{2,6}]decan (Handelsprodukt TCD-Alkohol M der Fa. Hoechst AG), 8-Hydroxytricyclo[5.2.1.0^{2,6}]dec-3-en, 9-Hydroxytricyclo[5.2.1.0^{2,6}]dec-3-en, dann kann die Dicarbonsäure oder deren Anhydrid(e) aus der Gruppe von Bemsteinsäure(anhydrid), Glutarsäure(anhydrid), Chinolindicarbonsäure(anhydrid), Furandicarbonsäure(anhydrid), Pyridindicarbonsäure(anhydrid), Phthalsäure(anhydrid), Hexahydrophthalsäure(anhydrid), Tetrahydrophthalsäure(anhydrid), Methylhexahydrophthalsäure(anhydrid), Naphtalindicarbonsäure(anhydrid) und Maleinsäure(anhydrid) ausgewählt sein. Die Bezeichnung ,,(anhydrid)" bedeutet hier und im folgenden, daß sowohl die freie Säure als auch deren Anhydrid gemeint ist.
Wenn die Dicarbonsäure oder deren Anhydrid(e) als Ausgangsstoff für das Reaktionsprodukt die polycycloaliphatische Verbindung ist, kann der Alkohol auch ein aliphatischer einwertiger Alkohol, z.B. Methanol, Ethanol, n-Propanol, Isopropanol, Methoxypropanol, n-Butanol, Isobutanol, 2-Ethyl-1-hexanol, 1-Hexanol, ein Heptylalkohol, ein Nonylalkohol; ein Fettalkohol, z.B. Octanol, Decanol, Dodecanol; ein Glycolmonoether, z.B. Methylglycol, Ethylglycol, Butylglycol, Polyglycolmonoether; ein aromatischer einwertiger Alkohol, z.B. Benzylalkohol; oder ein cycloaliphatischer einwertiger Alkohol, z.B. Cyclohexanol, Cyclododecanol, Cyclopentanol sein.
Vorzugsweise handelt es sich bei dem Reaktionsprodukt um einen Halbester von Phthalsäure(anhydrid), Hexahydrophthalsäure(anhydrid) oder Methylhexahydrophthalsäure(anhydrid) mit tricyclischen einwertigen Alkoholen, z.B. solchen, die vorstehend als Hydroabietylalkohol aufgeführt wurden.

Der eine Carboxylgruppe enthaltende polycycloaliphatische Stoff kann zusätzlich auch eine oder mehrere aromatische Verbindungen enthalten, vorzugsweise aus der Gruppe aromatischer Monocarbonsäuren wie Naphthoesäure; Benzolmonocarbonsäuren wie Benzoesäure, o-Toluylsäure, m-Toluylsäure, p-Toluylsäure, Hydroxybenzoesäure, tert.-Butylbenzoesäure; aromatischen heterocyclischen Monocarbonsäuren wie Pyridincarbonsäuren, Furancarbonsäuren.

Werden hohe Anforderungen an die Witterungsbeständigkeit des Acrylpolymerisats bzw. des daraus hergestellten Klarlackes, lasierenden Decklackes oder der Überzugsmassen gestellt, so werden keine aromatischen oder heterocyclischen Monocarbonsäuren mitverwendet oder die Gesamtmenge an aromatischen Ringen, einschließlich von Vinylaromaten, z.B. Styrol, beträgt nicht mehr als 30 Gew.-%, bezogen auf das modifizierte Acrylcopolymerisat.

Epoxidgruppenhaltigen Acrylcopolymerisate, die für die Erfindung eingesetzt werden können, sind in zahlreichen Patentschriften, beispielsweise in der EP-A-212 457, DE-OS 39 24 618, EP-A-450 963, EP-A-351 966, oder DE-OS 40 27 742, beschrieben.

Gemäß einer bevorzugten Ausführungsform der Erfindung ist das epoxidgruppenhaltige Copolymer durch Polymerisation einer oder mehrerer mindestens eine Epoxidgruppe und mindestens eine ethylenisch ungesättigte Gruppierung enthaltenden Verbindungen mit einem oder mehreren anderen Monomeren erhalten worden.
Die Verbindung, die mindestens eine Epoxidgruppe und mindestens eine ethylenisch ungesättigte Gruppierung enthält, kann beispielsweise ein Allylglycidylether oder Glycidyl(meth)acrylat sein.

Die Bezeichnung (Meth) bzw. (meth) in (meth)acryl- bedeutet hier wie auch im weiteren, daß sowohl die Methacryl- als auch die Acrylverbindungen umfaßt sind.

Das andere oder die anderen Monomer(en) können beispielsweise Alkyl(meth)acrylat(e), Styrol, Vinyltoluol, Polypropylenglykolmono(meth)acrylat, Hydroxyalkyl(meth)acrylat(e) und/oder hydroxylhaltige Umsetzungsprodukte von Hydroxyalkyl(meth)acrylaten mit Lactonen wie z.B. ε-Caprolacton sein.
Vorzugsweise wird von epoxidgruppenhaltigen Acrylcopolymerisaten mit einem Epoxidwert von 0,1 bis 0,5 pro durchschnittlichem Molekulargewicht, vorzugsweise 1000 bis 10 000, insbesondere 1500 bis 5000, bestimmt durch Gelpermeationschromatograhie (GPC), ausgegangen.

Zur Herstellung eines erfindungsgemäßen Acrylcopolymerisats können, vorzugsweise durch Lösungspolymerisation, 15 bis 75 Gew.-% monoolefinische Monoglycidylverbindungen, z.B. Allylglycidylether, Glycidylacrylat, vorzugsweise Glycidylmethacrylat, 25 bis 82 Gew.-% copolymerisierbare carboxylgruppenfreie α,β-ethylenisch ungesättigte Monomere, gegebenenfalls eine Hydroxylgruppe enthaltend, und 0 bis 3 Gew.-% copolymerisierbare carboxylgruppenhaltige α,β-ethylenisch ungesättige Monomere, wobei die Summe aller Komponenten stets 100 Gew.-% ergibt, eingesetzt. Vorzugsweise werden zur Herstellung der epoxidgruppenhaltigen Acrylcopolymerisate 20 bis 50 Gew.-% Glycidyl(meth)acrylat, 0 bis 30 Gew.-% Styrol und/oder Vinyltoluol, 5 bis 25 Gew.-% Hydroxyalkyl(meth)acrylate, z.B. Hydroxyethyl(meth)acrylat, Hydroxypropyl(meth)acrylat, Hydroxybutyl(meth)acrylat, Polypropylenglycolmonomethacrylat, hydroxylgruppenhaltige Umsetzungsprodukte von Hydroxyalkyl(meth)acrylaten, z.B. Hydroxyethylacrylat, mit Lactonen, z.B. ε-Caprolacton, und 25 bis 40 Gew.-% (Meth)acrylsäureester, z.B. Methylmethacrylat, Butyl(meth)acrylat, 2-Ethylhexyl(meth)acrylat, Cyclohexylmethacrylat, Furfurylmethacrylat, Lauryl(meth)acrylat, Stearyl(meth)acrylat, Trimethylcyclohexylmethacrylat, Tetracyclo-dodecyl-3-acrylat, wobei die Summe aller Komponenten stets 100 Gew.-% ergibt, eingesetzt. Gegebenenfalls können auch Vinylester, z.B. Vinylacetat, Vinylpropionat, "VeoVa 10" (Shell) und/oder Umsetzungsprodukte von "Cardura E 10" (Shell) mit Acrylsäure, z.B. hergestellt gemäß DE-PS 28 58 784, in untergeordneten Mengen, z.B. bis zu 30 Gew.-%, bezogen auf Gesamtmenge der anderen Monomeren, mitverwendet werden.

Das erfindungsgemäße modifizierte Acrylcopolymerisat kann gegebenenfalls zusätzlich die zur Lackherstellung üblichen Zusatz- und Hilfsstoffe enthalten, wie z.B.
- oberflächenaktive Mittel, z.B. Netz- und Verlaufmittel auf Siliconbasis, z.B. polyethermodifizierte Dimethylpolysiloxan-Copolymere, Fluortenside;
- Rheologie-Hilfsmittel, z.B. Antiablaufmittel (SCA-modifizierte Acrylcopolymere; SCA = Sagging Control Agents);
- Verdickungs- oder Thixotropierungsmittel, z.B. hochdisperse Kieselsäure, Polyurethane, hochviskose Acrylcopolymerisate mit Acryl- und/oder Methacrylsäure als häuptsachlich wirksamen copolymerisierten Bestandteil; Säurekatalysatoren, z.B.; aromatische Sulfonsäuren, z.B. p-Toluolsulfonsäure, Dinonylnaphthalindisulfonsäure, Dodecylbenzolsulfonsäure, die auch geblockt sein können, z.B. mit tertiären Aminen, z.B. Morpholin, Phosphorsäure, saure Teilester von Phosphorsäure mit ein- oder zweiwertigen Alkoholen, z.B. Phosphorsäuremonobutylester, Halbester von Dicarbonsäuren bzw. deren Anhydriden mit einwertigen Alkoholen, z.B. Maleinsäuremonobutylester, Lösungen von Polysäuren in organischen geeigneten Lösungsmitteln, z.B. 20 %ige Lösungen von Maleinsäure in Methoxypropanol;
- Beschleuniger, z.B. tertiäre Amine, z.B. Triethylamin, Dibutylzinndioxid, Dibutylzinndilaurat, Metallalkoholate, z.B. Aluminiumisopropylat, Butyltitanat, Metallchelate von Aluminium, Zirkon oder Titan z.B. Titanylacetylacetonat;
- Lichtschutzmittel, z.B. Benztriazol-Derivate und HALS-Verbindungen (HALS - Hindered Amine Light Stabilizer);
- Polymerisationsinitiatoren, vorzugsweise solche, die erst bei höheren Temperaturen, z.B. 100°C oder höher, wirksam werden, z. Di-tert.-Butylperoxid, tertiäres Butylperbenzoat;
- Lösemittel (organische Lösemittel, Wasser);
- Vernetzungsmittel, insbesondere
   - carboxyfunktionelle Komponenten, vorzugsweise Polycarbonsäuren oder deren Anhydride, z.B. Itaconsäure, Citraconsäureanhydrid, Dodecandisäure, 2-Dodecendisäure, Dodecenylbernsteinsäureanhydrid, Phthalsäureanhydrid, Tetrahydrophthalsäureanhydrid, Trimellithsäureanhydrid, 1,2-, 1,3- und 1,4-Cyclohexandicarbonsäure, Hexahydrophthalsäureanhydrid, bzw. deren Gemische, wie sie üblicherweise zur Härtung von Polyepoxiden, z.B. Diepoxiden auf der Basis von Bisphenol A, cycloaliphatischen Diepoxiden, z.B. Hexahydrophthalsäurediglycidylester, 3,4-Epoxycyclohexylmethyl-3',4'-epoxycyclohexancarboxylat, epoxidgruppenhaltigen Acrylcopolymerisaten mit mehr als einer, vorzugsweise zwei oder mehr, Epoxidgruppen pro Durchschnittsmolekulargewicht eingesetzt werden oder auch Polysäuren, die durch Umsetzung eines Polyols, z.B. 1,6-Hexandiol, Trimethylolpropan, mit einem Säureanhydrid, z.B. Hexahydrophthalsäureanhydrid, Methylhexahydrophthalsäureanhydrid, gebildete Halbester sind, wie sie beispielsweise in der EP-A-212 457 beschrieben sind, und carboxyfunktionelle Acrylcopolymerisate, z.B. hergestellt durch den Einsatz erheblicher Mengen von (Meth)Acrylsäure bei der Herstellung von Acrylcopolymerisaten, z.B. mit einer Säurezahl von 70 oder höher, sowie Anhydrid-Acrylcopolymerisate, z.B. hergestellt durch den Einsatz von Maleinsäureanydrid und/oder Itconsäure bei der Herstellung von Acrylcopolymerisaten, wie sie z.B. in der EP-A-358 306, EP-A-966, EP-A-316 873 beschrieben sind sowie carboxylgruppenhaltige ungesättigte oder gesättigte Polyester, insbesondere mit höherer Säurezahl, z.B. 70 oder höher; und/oder
   - Aminoplaste, die mit den modifizierten Acrylcopolymerisaten lacktechnisch einwandfrei verträglich sind; vorzugsweise ganz oder teilweise mit einwertigen Alkoholen, insbesondere C₁-C₄-Alkoholen, veretherte Aminoplaste, z.B. Harnstoff- und/oder Triazin-Formaldehydharze, insbesondere Melamin-Formaldehydharze, Benzoguanaminharze, z.B. Tetramethoxybenzoguanamin, Triazin-Formaldehydharze, hergestellt gemäß DE-OS 42 37 515, z.B. durch Umsetzung von 2,4-Diamino-6-diethylaminotriazin, Paraformaldehyd und Butanol, Hexamethoxymethylmelamin, Hexamethylbutoxymethylmelamin, Tetramethoxymethylglycoluril; insbesondere carboxylgruppenhaltige Derivate von ganz oder teilweise veretherten Aminoplasten, wie sie z.B. in der DE-OS 35 37 855, US-A-3 519 627, US-A-3 502 557 und US-A-4 026 855 beschrieben sind; oder die in der einschlägigen Literatur (Karsten, Lackrohrstofftabellen, 9. Aufl., Curt R. Vincentz Verlag, Hannover 1992, S.269-288; European Resin Directory 1993, European Resin Manufacturers Association, S. 101-108) genannten Aminoplaste; und/oder
   - Lackpolyisocyanate mit freien, teilweise oder vollständig geblockten NCO-Gruppen, vorzugsweise Polyisocyanate, die insbesondere 3 freie, teilweise oder vollständig geblockte NCO-Gruppen enthalten, z.B. Lackpolyisocyanate auf der Basis von Toluoldiisocyanat, Hexamethylendiisocyanat oder Isophorondiisocyanat oder 3(4)-Isocyanatomethyl-1-methyl-cyclohexylisocyanat, z.B. deren Trimerisierungsprodukte mit Isocyanuratstruktur oder deren Modifizierungsprodukte mit Uretdion- oder Biuretstruktur in ihrem Aufbau oder Prepolymere mit freien NCO-Gruppen, z.B. Umsetzungsprodukte von Polyolen, z.B. Trimethylolpropan, mit Diisocyanaten; Polyisocyanate, die teilweise oder bevorzugt vollständig geblockte NCO-Gruppen enthalten, z.B. durch Einsatz üblicher Blockierungsmittel bzw. deren Gemische, z.B. Malonsäurediethylester, Acetessigester, Butanonoxim und/oder Caprolactam; die in der WO-93/05090 beschriebenen Zweikomponenten-Polyurethanlacke, auch High-Solid-Einbrennklarlacke, die als Vernetzungsmittel vorzugsweise ein Gemisch aus Lackpolyisocyanaten auf der Basis von Isophorondiisocyanat und Hexamethylendiisocyanat enthalten; die in der DE-OS 42 04 518 genannten Einbrennklarlacke für Mehrschichtlackierungen, wobei diese Klarlacke hydroxylgruppenhaltige Kunstharze und eine Mischung aus Aminoplastharzen und Mischungen von mit verschiedenen Blockierungsmitteln blockierten Polyisocyanaten enthalten;
- Zusätzliche Monocarbonsäuren, vorzugsweise gesättigte Monocarbonsäuren mit mindestens 7 Kohlenstoffatomen, insbesondere gesättigte unverzweigte Fettsäuren, z.B. Pelargonsäure, Undecansäure, Palmitinsäure, Stearinsäure, Laurinsäure, Kokosölfettsäure, Palmkernölfettsäure, 2-Ethylhexansäure. Zur Erzielung spezieller Effekte, z.B. Verlaufverbesserung, Erhöhung der Chemikalien- und Wasserbeständigkeit, können diese Fettsäuren auch ein oder mehrere Fluoratome als weitere Substituenten enthalten, z.B. Pentadecafluoroctansäure (Perfluoroctansäure, Handelsprodukt Fluorad Säure F 26 der Firma 3M Deutschland GmbH).
- weitere Bindemittelkomponenten, vorzugsweise Harze, die mit den modifizierten Acrylcopolymerisaten und Vernetzungsmitteln lacktechnisch einwandfrei verträglich sind, insbesondere carboxyl- und hydroxylgruppenhaltige Acrylcopolymerisate und/oder carboxyl- und hydroxylgruppenhaltige gesättigte oder ungesättigte Polyester in untergeordneten Mengen (1 bis 30 Gew.-%), bezogen auf modifiziertes Acrylcopolymerisat enthalten.

Nichtwäßrige Klarlacke bzw. lasierende Decklacke, die die erfindungsgemäßen, für nicht wäßrige Lacke entsprechend modifizierten Acrylpolymerisate beinhalten, enthalten als Vernetzungsmittel vorzugsweise ganz oder teilweise veretherte Melamin-Formaldehydharze, insbesondere mit Methanol und/oder Ethanol und/oder n-Propanol und/ oder Isopropanol und/oder n-Butanol und/oder Isobutanol veretherte Melamin-Formaldehydharze, z.B. Hexamethoxymethylmelamin, Methoxymethylethoxymethylmelamin, Methoxymethylbutoxymethylmelamin, Methoxymethylmelamin, Methoxymethylisobutoxymethylmelamin, und/oder carboxylgruppenhaltige Derivate von ganz oder teilweise veretherten Aminoplasten vorzugsweise carboxylgruppenhaltige Derivate von Hexamethoxymethylmelamin mit Polycarbonsäuren bzw. deren Anhydride der vorstehend beschriebenen Art, gegebenenfalls in Mischung mit Lackpolyisocyanaten, vorzugsweise auf der Basis von Hexamethylendiisocyanat und/oder Isophorondiisocyanat, deren NCO-Gruppen vollständig blockiert sind, so daß gut lagerbeständige einkomponentige Einbrennklarlacke resultieren. Selbstverständlich können die erfindungsgemäß zu verwendenden Klarlacke bzw. lasierenden Decklacke als Vernetzungsmittel nur Lackpolyisocyanate mit freien NCO-Gruppen, vorzugsweise auf der Basis von Hexamethylendiisocyanat und/oder Isophorondiisocyanat, enthalten, wenn sie als Zweikomponenten-Polyurethanlacke, gegebenenfalls unter Zusatz geringer Mengen an Melamin-Formaldehydharzen, für die Kalthärtung bei Raumtemperatur oder wenig erhöhter Temperatur, z.B. 60 °C, oder als 2K-Einbrennlacke angewendet werden sollen.
Diese nichtwäßrigen bzw. lösungsmittelverdünnbaren Klarlacke bzw. lasierenden Decklacke enthalten die üblicherweise bei der Lösungspolymerisation von Acrylcopolymerisaten und bei der Herstellung von Einbrennlacken eingesetzten Lösungsmittel, z.B. aromatische Kohlenwasserstoffe, z.B. Xylol, Ester, z.B. Methoxypropylacetat, Ketone, z.B. Butanon, Methylisobutylketon, Alkohole, z.B. Butanol, Methoxypropanol, Glycolmonoether, z.B. Butylglycol, bzw. deren Mischungen, z.B. Mischungen aus überwiegend aromatischen Erdöldestillat-Lösungsmitteln mit höherem Siedepunkt und Butanol, und lassen sich mit diesen Lösungsmitteln bzw. Lösungsmittelmischungen auf Anwendungsviskosität verdünnen. Der Festkörpergehalt dieser Klarlacke bzw. lasierenden Decklacke beträgt in anwendungstechnischer Form, z.B. bei Spritzviskosität, vorzugsweise mindestens 45Gew.-%, insbesondere 50 Gew.-% oder höher.
Sie können im allgemeinen durch Spritzlackierverfahren, z.B. Druckluft-, Heiß- oder Airless-Spritzen, oder durch elektrostatische Lackierverfahren, z.B. mittels schnellrotierender Glocken (Minibells), elektrostatische Automatik- oder Handspritzpistolen mit Luftunterstützung, oder durch Walzen, z.B. im Bandlackierverfahren, aufgetragen.
Erfindungsgemäß verwendete nichtwäßrige bzw. lösungsmittelverdünnbare Klarlacke bzw. lasierende Decklacke können auch als nichtwäßrige Dispersion in organischen Lösungsmitteln (NAD = None Aqueous Dispersion) vorliegen; beispielsweise kann die Herstellung der NADs durch Auswahl geeigneter Lösungsmittel-Kombinationen und/oder durch Einarbeitung von vernetzten Polymer-Mikroteilchen (Mikrogele), z.B. hergestellt durch Emulsionspolymerisation von Acrylmonomeren unter Mitverwendung von mehrfach ungesättigten Acrylmonomeren, z.B. Hexandioldiacrylat, Trimethylolpropantriacrylat, gegebenenfalls unter Einsatz von Dispersionsstabilisatoren auf der Basis von Hydroxystearinsäure und Acrylmonomeren, erfolgen.

Wäßrige Klarlacke bzw. lasierende Decklacke, die die erfindungsgemäßen, für wäßrige Lacke das entsprechend modifizierten Acrylcopolymerisate beinhalten, enthalten als Vernetzungsmittel vorzugsweise ganz oder teilweise veretherte Aminoplaste und/oder carboxylgruppenhaltige Derivate von Hexamethoxymethylmelamin, wie sie bereits vorstehend für den Einsatz in nichtwäßrigen Klarlacken bzw. lasierenden Decklacken beschrieben wurden, jedoch mit der Einschränkung, daß nur solche Aminoplaste enthalten sind, die in Kombination mit modifizierten wasserverdünnbaren Acrylcopolymerisaten, gegebenenfalls unter Zusatz von sogenannten Co-Lösungsmitteln, z.B. Butanol, Methoxypropanol, Butylglycol, bzw. deren Gemische, wasserverdünnbar werden oder von vornherein bereits wasserverdünnbar sind, z.B. Methoxymethylmethylolmelamin, und/oder geblockte polyisocyanate, die durch eine Modifizierung mit hydrophilen Gruppen und/oder durch den Einbau von Carboxylgruppen, z.B. durch den Einsatz von Dimethylolpropionsäure während deren Herstellung, wasserverdünnbar sind, beispielsweise Handelsprodukte der Firma Bayer, oder erfindungsgmäß zu verwendende wäßrige Klarlacke bzw. lasierende Decklacke enthalten bei einer Anwendung als 2K-System einemulgiert niedrigviskose Lackpolyisocyanate mit freien NCO-Gruppen, vorzugsweise trimerisiertes Hexamethylendiisocyanat bzw. hydrophile eingestellte Polyisocyanate auf dieser Basis.
Diese Klarlacke bzw. lasierenden Decklacke enthalten als Lösungsmittel gegebenenfalls relativ geringe Mengen an Co-Lösungsmitteln, z.B. wassermischbare Lösungsmittel, z.B. Butylglycol, Butanol, Methoxypropanol, bzw. deren Mischungen, vorzugsweise in einer Menge von unter 10 Gew.-%, insbesondere unter 5 Gew.-%, bezogen auf die anwendungstechnische Form der Klarlacke bzw. lasierenden Decklacke, während das Hauptlösungsmittel Wasser ist und selbstverständlich auch noch die Neutralisationsmittel, z.B. tertiäre Amine, vorzugsweise Dimethylaminoethanol, enthalten sind. Der Festkörpergehalt dieser Klarlacke bzw. lasierenden Decklacke beträgt in anwendungstechnischer Form, z.B. bei Spritzviskosität, vorzugsweise mindestens 30 Gew.-%, insbesondere mindestens 35 Gew.-%.

In einer weiteren erfindungsgemäßen Ausführungsform findet das erfindungsgemäße modifizierte Acrylcopolymerisat in einem Pulverlack Verwendung. Insbesondere enthalten die pulverförmigen Klarlacke bzw. lasierenden Decklacke ein modifiziertes Acrylcopolymerisat, das bei Raumtemperatur als festes Harz vorliegt, beispielsweise mit einer Glasübergangstemperatur (Tg) von 30 °C oder höher oder Erweichungspunkten von 40 bis 150 °C, und sich in üblicher Weise entsprechend dem Stand der Technik zu Pulverklarlack oder zu lasierendem Pulverdecklack verarbeiten läßt.
Diese pulverförmigen Klarlacke bzw. lasierenden Decklacke können ein modifiziertes Acrylcopolymerisat enthalten, bei dessen Herstellung vorzugsweise von lösungsmittelfreien epoxidgruppenhaltigen Acrylcopolymerisaten, z.B. Handelsprodukte wie "PD 7610 Resin" von Mitsui Toatsu, ausgegangen wurde. Die Lösungsmittelfreiheit von epoxidgruppenhaltigen Acrylcopolymerisaten kann nach dem Stand der Technik durch Massepolymerisation oder dadurch erreicht werden, daß die Lösungsmittel eines durch Lösungspolymerisation hergestellten epoxidgruppenhaltigen Acrylcopolymerisats nach dessen Herstellung entfernt werden, z.B. durch Vakuumdestillation. Selbstverständlich ist es aber auch möglich, ein durch Lösungspolymerisation hergestelltes epoxidgruppenhaltiges Acrylcopolymerisat in Lösung mit den beanspruchten Modifizierungsmitteln zu einem modifizierten Acrylcopolymerisat umzusetzen und anschließend die Lösungsmittel zu entfernen, z.B. durch Vakuumdestillation. Zweckmäßigerweise werden dabei Lösungsmittel eingesetzt, die relativ niedrige Siedepunkte, z.B. zwischen 80 und 140 °C, aufweisen.
Bei diesen pulverförmigen Klarlacken (Pulver-Klarlacken) bzw. lasierenden Decklacken ist das Verhältnis von Epoxidgruppen zu Carboxylgruppen abhängig von der Art und Menge der zusätzlich im Klarlack bzw. lasierendem Decklack enthaltenen Vemetzungsmittel, z.B. carboxyfunktionelle Komponenten, pulverförmige Aminoplaste, geblockte Polyisocyanate, bzw. deren Mischungen.
Solche Klarlacke (Pulverklarlacke) bzw. lasierende Decklacke enthalten als Vernetzungsmittel vorzugsweise aliphatische Dicarbonsäuren wie z.B. Dodecandisäure (vgl. WO 94/05714) und cycloaliphatische Dicarbonsäuren wie 1,2-, 1,3- und/oder 1,4-Cyclohexandicarbonsäure und/oder Hexahydrophthalsäureanhydrid, vorzugsweise Gemische von 1,4-Cyclohexandicarbonsäure und Hexahydrophthalsäureanhydrid, und/oder insbesondere carboxylgruppenhaltige, bei Raumtemperatur als feste Harze vorliegende gesättigte und/oder ungesättigte Polyester, z.B. mit einem Erweichungspunkt von 60 bis 110 °C und höherer Säurezahl, z.B. 70 oder höher, vorzugsweise ungesättigte Polyester mit diesen Eigenschaften, hergestellt durch Umsetzung einer Dicarbonsäurekomponente aus 1,4-cyclohexandicarbonsäure und/oder Hexahydrophthalsäuranhydrid und/oder Isophthalsäure, einer Diolkomponente aus Neopentylglycol und/oder Hydroxypivalinsäureneopentylglycolester und/oder Cyclohexandimethanol, sowie ungesättigten Diolen aus Monoallylethern von dreiwertigen Alkoholen, vorzugsweise Trimethylolpropanmonoallylether, in einer Menge von 10-30 Gew.-%, bezogen auf die Gesamtsumme aller Komponenten, unter bei der Herstellung von ungesättigten Polyestern üblichen Verfahrensbedingungen in der Weise, daß zunächst ein ungesättigter Polyester mit Hydroxylgruppen, vorzugsweise mit einem Hydroxylgehalt von 3 bis 10 Gew.-%, hergestellt wird, der dann anschließend beispielsweise mit Polycarbonsäureanhydriden, vorzugsweise Maleinsäureanhydrid, Citraconsäureanhydrid, Hexahydrophthalsäureanhydrid, Tetrahydrophthalsäureanhydrid, Trimellithsäureanhydrid, unter Halbesterbildung ohne oder ohne nennenswerte Abspaltung von Wasser bei relativ niedrigen Temperaturen, z.B. 60 bis 160 °C, umgesetzt wird und/oder Pulverlack-Vernetzungsmittel auf der Basis von geblockten Polyisocyanaten, insbesondere auf der Basis von Hexamethylendiisocyanat und/oder Isophorondiisocyanat und üblichen Blockierungsmitteln bzw. deren Gemische, z.B. Butanonoxim, Malonsäurediethylester, Acetessigester, Caprolactam, und/oder pulverförmige Aminoplaste, besonders bei Raumtemperatur wachsartiges Hexamethoxymethylmelamin, Tetramethoxybenzoguanamin und/oder Tetramethoxymethylglycoluril.
Insbesondere enthalten die pulverförmigen Klarlacke bzw. lasierenden Decklacke als Vernetzungsmittel Pulverlack-Vernetzungsmittel auf der Basis von 3(4)-Isocyanatomethyl-1-methyl-cyclohexylisocyanat, wie sie beispielsweise in Farbe und Lack, Heft 5, Mai 1994, Curt R. Vincentz Verlag Hannover, Seiten 330-335, beschrieben sind, und deren NCO-Gruppen nicht blokkiert sind. Erfindungsgemäß verwendete pulverförmige Klarlacke oder lasierende Decklacke werden nach den Methoden der Pulverlackierung mit elektrostatischen Automatik- oder Handspritzpistolen aufgetragen werden. Erfindungsgemäß modifiziertes Acrylcopolymerisat enthaltende pulverförmige Klarlacke bzw. lasierende Decklacke werden bei den für die Pulverlackierung üblichen Einbrennbedingungen eingebrannt (Temperatur zwischen 130 bis 200 °C; Dauer zwischen 20 bis 30 min.).

Das Acrylcopolymerisat kann erfindungsgemäß als Überzugsmasse, Pulverlack, Klarlack, Decklack oder lasierender Decklack, insbesondere in der Automobilindustrie, Verwendung finden.

In einer besonderen Ausführungsform findet das Acrylcopolymerisat in einem Klarlack auf Wasserbasis Verwendung, insbesondere in der Automobilindustrie.
Solche Klarlacke bzw. lasierende Decklacke enthalten 50 bis 90 Gew.-%, vorzugsweise 60 bis 80 Gew.-%, modifizierte Acrylcopolymerisate und 10 bis 50 Gew-.%, vorzugsweise 20 bis 40 Gew.-%, Vernetzungsmittel, bezogen auf das Bindemittel.

Bei den nichtwäßrigen bzw. lösungsmittelverdünnbaren oder wäßrigen, das erfindungsgemäß modifizierte Acrylcopolymerisat enthaltende Klarlacke bzw. lasierenden Decklacken können die Einbrenntemperaturen im allgemeinen zwischen 80 °C und 240 °C für eine Dauer von etwa 30 bis 60 min liegen.
Solche nichtwäßrigen bzw. lösungsmittelverdünnbaren oder wäßrigen Klarlacke bzw. lasierende Decklacke, die als Vernetzungsmittel überwiegend Lackpolyisocyanate mit freien NCO-Gruppen enthalten, können als Zweikomponentensysteme bereits bei Raumtemperatur härten; sie können aber auch forciert wärmegetrocknet, d.h. bei Temperaturen zwischen 40 und 160 °C eingebrannt werden.

Insbesondere kann das erfindungsgemäße modifizierte Acrylcopolymerisat in einer Mehrschichtlackierung Verwendung finden, die aus dem Auftrag eines pigmentierten Basislackes und Ausbildung einer Basisschicht sowie dem Auftrag eines Klarlackes oder eines lasierenden Decklackes im "Naß-in-naß-Verfahren", der das erfindungsgemäße Acrylcopolymerisat enthält, und gemeinsamer Härtung beider Lacke erhalten wird.
Eine solche Mehrschichtlackierung eignet sich besonders für die Automobilseriendecklackierung, insbesondere Zweischichtmetallicdecklackierungen. Es kann aber auch für die Autoreparaturlackierung, insbesondere für die Automobilseriendecklackierungsreparatur, für Zweirad-Mehrschichtlackierungen, Mehrschichtlackierungen von Elektrogeräten oder Maschinen, für Kunststoff-Mehrschichtlackierungen, insbesondere von Automobil-Kunststoff-Teilen, sowie für das Bandlackierverfahren angewendet werden.
Dabei erfolgt der Auftrag der das erfindungsgemäße Acrylcopolymerisat enthaltenden Klarlacke bzw. lasierenden Decklacke im allgemeinen so, daß eine Trockenfilmschichtdicke von 20 bis 60 µm des Klarlack-Überzuges bzw. des lasierenden Decklack-Überzuges resultiert.

Eine erfindungswesentliche Eigenschaft des modifizierten Acrylcopolymerisats bzw. eines aus diesem modifizierten Acrylcopolymerisat hergestellten Klarlacks, lasierenden Decklacks oder der entsprechenden Mehrschichtlakkierung ist die, daß sie nach Aushärtung auf pigmentierten Basislacken als Substraten Filme mit erhöhtem Glanz bilden, wenn man sie mit analog hergestellten Acrylcopolymerisaten vergleicht, die durch Modifizierung eines epoxydgruppenhaltigen Copolymerisats mit einem eine Carboxylgruppe enthaltenden Stoff mit einem Brechungsindex bei 20 °C von weniger als 1,440 erhalten werden.

Die Glanzbestimmung wurde gemäß den Normen DIN 67539, ISO 2813 und ASTM D 523 mit einem Haze-Gloss-Meßgerät der Firma Byk-Gardner bei einem Meßwinkel von 20° durchgeführt.

Eine weitere erfindungswesentliche Eigenschaft des modifizierten Acrylcopolymerisats bzw. eines aus diesem modifizierten Acrylcopolymerisat hergestellten Klarlacks, lasierenden Decklacks oder der entsprechenden Mehrschichtlackierung ist die, daß die aus ihnen hergstellten Überzugsmassen gute Steinschlag- und Chemikalienbeständigkeit, insbesondere gegenüber sauren Reagenzien, gute Lösungsmittelbeständigkeit, z.B. gegenüber Kraftstoff, hohe Härte und gute Elastizität, sowie ausgezeichnete Witterungsbeständigkeit haben. Sie sind somit vergleichbaren Mehrschichtlackierungen, bei deren Herstellung Klarlacke bzw. lasierende Decklacke auf der Basis von hydroxyl- und carboxylgruppenhaltigen Acrylcopolymerisaten und Aminoplasten, insbesondere Melamin-Formaldehydharze, verwendet werden, weit überlegen.

Die folgenden Beispiele dienen der Erläuterung der Erfindung:

### Herstellung eines epoxidgruppenhaltigen Acrylcopolymerisats (Vorstufe)

In einem 4-Hals-Kolben, ausgestattet mit KPG-Rührer, Rückflußkühler, Tropftrichter und Thermoelement, werden 410 g Solvesso 100 (höher alkylierte Aromaten mit Siedebereich von 162 bis 175 °C, Esso Chemie) und 7,8 g Cumolhydroperoxid vorgelegt und auf 160 °C aufgeheizt. Innerhalb von 4 Stunden läßt man ein Monomerengemisch aus 57 g Butylmethacrylat, 177 g Styrol, 177 g Glycidylmethacrylat, 212 g 2-Ethylhexylacrylat und 85 g Hydroxypropylacrylat sowie 21,5 g tert.-Butylperoctoat und 18 g Solvesso 100 zutropfen. Nach beendeter Zugabe wird 1 Stunde nachgerührt und anschließend durch Zugabe von 2,4 g tert.-Butylperoctoat und 3,6 g Solvesso 100 innerhalb von 30 Minuten nachpolymerisiert. Nach weiteren 2 Stunden Nachreagieren bei 160 °C läßt man abkühlen. Die verbleibende epoxidgruppenhaltige Acrylcopolymerisatlösung besitzt einen Festkörpergehalt von 63 Gew.-% und eine Viskosität von 15 Sekunden bei 20°C im DIN-Becher Nr. 4 nach Verdünnung auf 45 Gew.-% mit Solvesso 100.

### BEISPIEL 1 (Vergleich)

### Modifizierung mit einer Carbonsäure mit einem Brechungsindex < 1,440

562 g der als Vorstufe bezeichneten epoxidgruppenhaltigen Acrylcopolymerisatlösung werden mit 123 g Stearinsäure bei 160 °C bis zu einer Säurezahl von 5 umgesetzt. Nach Abkühlen verdünnt man mit 100 g Solvesso 100 und erhält so eine modifizierte Epoxyacrylatlösung mit einem Festkörpergehalt von 60 Gew.-% und einer Viskosität von 16 Sekunden bei 20 °C im DIN-Becher Nr. 4 nach Verdünnen auf 45 Gew.-% mit Solvesso 100.

### BEISPIEL 2

562 g der als Vorstufe bezeichneten epoxidgruppenhaltigen Acrylcopolymerisatlösung werden mit 277 g einer in Solvesso 100 66 %igen Lösung des Halbesters aus Hexahydrophthalsäureanhydrid und TCD-Alkohol-M (Hoechst AG) bei 160 °C bis zu einer Säurezahl von 5 umgesetzt. Nach dem Abkühlen verdünnt man mit 50 g Solvesso 100 und erhält so eine modifizierte Epoxyacrylatlösung mit einem Festkörper von 62 Gew.-% und eine Viskosität von 17 Sekunden bei 20 °C im DIN-Becher Nr. 4 nach Verdünnen auf 45 Gew.-% mit Solvesso 100.

### Beispiel 3 (Klarlack-Vergleichsbeispiel)

### Klarlack aus Acrylcopolymerisat nach Vergleichsbeispiel 1

40,2 Gew.-Teile des unter Beispiel 1 hergestellten Acrylcopolymerisats (Festkörpergehalt 60 Gew.-% in Solvesso 100) werden mit 26,5 Gew.-Teilen eines handelsüblichen Methanol/n-Butanol mischveretherten Melaminharzes (85 Gew.-% gelöst in n-Butanol) vermischt. Dann werden 12 Gew.-Teile eines handelsüblichen mit SCA (Sagging Control Agent) modifizierten Acrylatcopolymerisats (60 Gew.-% in Solvesso 100/Butylacetat 2:1) eingearbeitet. Anschließend versetzt man mit 1,0 Gew.-Teilen UV-Absorber auf Benzotriazol-Basis und 0,5 Gew.-Teilen einer HALS-Verbindung. Nun werden 2,5 Gew.-Teile eines handelsüblichen Phosphorsäurekatalysators (4 Gew.-% in n-Butanol) und 1,0 Gew.-Teile eines in n-Butanol 10 %igen Verlaufsmittels auf Polysiloxanbasis zugegeben. Durch Zugabe von 15 Gew.-Teilen Xylol wird auf Spritzviskosität von 55 Sekunden im Ford-Becher bei 20 °C eingestellt.

### Beispiel 4 (Klarlack)

39 Gew.-Teile des modifizierten Acrylcopolymerisats (Festkörper 62 Gew.-%) gemäß Beispiel 2 werden mit 26,5 Gew.-Teilen eines handelsüblichen Methanol-/n-Butanol mischveretherten Melaminharzes (85 Gew.-% gelöst in n-Butanol) vermischt. Dann werden 12 Gew.-Teile eines handelsüblichen mit SCA (Sagging Control Agent) modifizierten Acrylatcopolymerisats (60 Gew.-% in Solvesso 100/Butylacetat 2:1) eingearbeitet. Anschließend versetzt man mit 0,1 Teil UV-Absorber auf Benzotriazol-Basis und 0,05 Gew.-Teilen einer HALS-Verbindung. Nun werden 2,5 Gew.-Teile eines handelsüblichen Phosphorsäurekatalysators (4Gew.-% in n-Butanol) und 1,0 Gew.-Teile eines in n-Butanol zehnprozentigen Verlaufsmittels auf Polysiloxanbasis zugegeben. Durch Zugabe von 15 Gew.-Teilen Xylol wird Spritzviskosität von 55 Sekunden im Ford-Becher bei 20 °C eingestellt.

### HERSTELLUNG DER TESTBLECHE

Als Substrate für die Klarlackapplikation dienen in der Automobilindustne übliche zinkphosphatierte Stahlbleche mit KTL- und Füller-Beschichtung. Auf diesen wird ein handelsüblicher Metallic-Basecoat auf Wasserbasis (Farbton mallard-green, FORD XSC-Nr.2683 SCM) mit einer Trockenfilmdicke von 10 bis 15 um appliziert und nach zehnminütigem Vortrocknen bei 80 °C mit einer 40 bis 50 um Klarlackschicht versehen. Anschließend wird 30 min bei 150 °C eingebrannt.

### Glanzmessung mit einem haze/gloss-Meßgerät bei Meßwinkel von 20°:

| | |
|---|---|
| Klarlack-Vergleichsbeispiel 3 | 89,0 |
| Klarlack-Beispiel 4 | 94,0 |

| **Bestimmung der Chemikalienbeständigkeit im Gradientenofen:** | | | | | | | | | | |
|---|---|---|---|---|---|---|---|---|---|---|
| Temperatur °C | 30 | | 35 | | 40 | | 45 | | 50 | |
| Lack aus Bspl. | 4 | 3 | 4 | 3 | 4 | 3 | 4 | 3 | 4 | 3 |
| dest. Wasser | 4 | 4 | 4 | 4 | 4 | 4 | 4 | 4 | 4 | 4 |
| 0,5 N HCl | 4 | 4 | 4 | 4 | 4 | 4 | 4 | 3 | 3 | 3 |
| 2,5 N HCl | 4 | 3 | 4 | 3 | 4 | 2 | 3 | 2 | 3 | 2 |
| 5 N HCl | 4 | 2 | 4 | 2 | 3 | 2 | 3 | 2 | 2 | 2 |
| VW-Solut.⁽¹⁾ | 4 | 4 | 4 | 4 | 4 | 4 | 4 | 4 | 3 | 2 |
| 0,5 Gew.-% H₃PO₄ | 4 | 4 | 4 | 4 | 4 | 4 | 4 | 2 | 4 | 2 |
| 0,1 Gew.-% HNO₃ | 4 | 4 | 4 | 4 | 4 | 4 | 4 | 4 | 3 | 3 |
| Pancreatin⁽²⁾ | 4 | 3 | 4 | 3 | 4 | 3 | 4 | 3 | 4 | 3 |
| Ford-US-Solut.⁽³⁾ | 3 | 2 | 3 | 2 | 2 | 2 | 1 | 1 | 1 | 1 |

| | | | | | | | | | | |
|---|---|---|---|---|---|---|---|---|---|---|
| ⁽¹⁾: 10 %ige Eisen(III)-Sulfat-Lösung | | | | | | | | | | |
| ⁽²⁾: als ca. 50 %ige Lösung in Wasser | | | | | | | | | | |
| ⁽³⁾: Mischung aus 47 Gew.-% Ameisensäure, 24 Gew.-% Tanninsäure (10 Gew.-% in Wasser), 24 Gew.-% Honig und 5 Gew.-% Albumin (10 Gew.-% in Wasser) | | | | | | | | | | |

Die Bewertung der Eigenschaften erfolgt nach einem Punktesystem mit folgender Bedeutung:
- 4:: in Ordnung
- 3:: leicht gequollen
- 2:: gequollen
- 1 :: Lack beschädigt
- 0:: Lack abgelöst

## Patentansprüche

1. Acrylcopolymerisat, erhältlich durch Modifizierung eines epoxidgruppenhaltigen Copolymerisats durch einen eine Carboxylgruppe enthaltenden polycycloaliphatischen Stoff mit mindestens 2 Cyclen mit einem Brechungsindex bei 20 °C von mindestens 1,460.

2. Acrylcopolymerisat nach Anspruch 1, dadurch gekennzeichnet, daß der eine Carboxylgruppe enthaltende polycycloaliphatische Stoff mindestens 3 Cyclen aufweist.

3. Acrylcopolymerisat nach Anspruch 1 oder 2, dadurch gekennzeichnet, daß das Molverhältnis von Carboxylgruppe zu Epoxidgruppe zwischen 0,5 bis 1,0, vorzugsweise zwischen 0,8 und 1,0, liegt.

4. Acrylcopolymerisat nach Anspruch 1 oder 2, dadurch gekennzeichnet, daß das Molverhältnis von Carboxylgruppe zu Epoxidgruppe zwischen 0,8 bis 1,0, vorzugsweise zwischen 0,9 und 1,0, liegt.

5. Acrylcopolymerisat nach Anspruch 4, dadurch gekennzeichnet, daß es bei erhöhter Temperatur mit Polycarbonsäuren und/oder deren Anhydriden unter Halbesterbildung weiter umgesetzt worden ist.

6. Acrylcopolymerisat nach Anspruch 5, dadurch gekennzeichnet, daß das Reaktionsprodukt aus Acrylpolymerisat und Polycarbonsäuren oder deren Anhydriden eine Säurezahl aufweist, die ausreichend ist, um das Reaktionsprodukt nach Neutralisation wasserverdünnbar zu machen.

7. Acrylcopolymerisat nach Anspruch 6, dadurch gekennzeichnet, daß das wasserverdünnbare Reaktionsprodukt durch Neutralisation mit Basen, vorzugsweise tertiären Aminen, erhalten worden ist.

8. Acrylcopolymerisat nach einem der vorhergehenden Ansprüche, dadurch gekennzeichnet, daß der eine Carboxylgruppe enthaltende Stoff einen Brechungsindex bei 20 °C von mindestens 1,480 hat

9. Acrylcopolymerisat nach einem der vorhergehenden Ansprüche, dadurch gekennzeichnet, daß der eine Carboxylgruppe enthaltende polycycloaliphatische Stoff eine tricycloaliphatische Monocarbonsäure aus der Gruppe von hydrierten Naturharzsäuren; Adamantancarbonsäuren; und tricyclischen Monocarbonsäuren, die sich vom Dicyclopentadien ableiten, wie z.B. Tricyclo[5.2.1.0.^{2,6}]decan-8-carbonsäure; vorzugsweise Tetrahydroabietinsäure, ist.

10. Acrylcopolymerisat nach einem der vorhergehenden Ansprüche, dadurch gekennzeichnet, daß der eine Carboxylgruppe enthaltende polycycloaliphatische Stoff ein Reaktionsprodukt aus mindestens zwei Verbindungen ist, von denen mindestens eine eine polycycloaliphatischer Verbindung mit einen Brechungsindex bei 20 °C von mindestens 1,460, vorzugsweise von mindestens 1,480, ist.

11. Acrylcopolymerisat nach Anspruch 10, dadurch gekennzeichnet, daß mindestens eine der polycycloaliphatischen Verbindungen, die einen Brechungsindex bei 20 °C von mindestens 1,480 hat, mindestens zu 10 Gew.-%, vorzugsweise zu mindestens 20 Gew.-%, und insbesondere zu mindestens zu 50 Gew.-%, in dem eine Carboxylgruppe enthaltenden polycycloaliphatischen Reaktionsprodukt enthalten ist.

12. Acrylcopolymerisat nach Anspruch 10 oder 11, dadurch gekennzeichnet, daß der eine Carboxylgruppe enthaltende polycycloaliphatische Stoff ein Reaktionsprodukt eines oder mehrerer Alkohole mit mindestens einer Dicarbonsäure und/oder deren Anhydrid(en) ist.

13. Acrylcopolymerisat nach Anspruch 12, dadurch gekennzeichnet, daß der Alkohol ein tricycloaliphatischer Monoalkohol aus der Gruppe der perhydrierten Naturharze wie Perhydroabietylalkohol; der Dicyclopentadien-Derivate, wie beispielsweise 8-Hydroxytricyclo[5.2.1.0^{2,6}]decan, 8-Hydroxymethyltricyclo[5.2.1.0^{2,6}]decan, 8-Hydroxytricyclo[5.2.1.0^{2,6}]dec3-en, 9-Hydroxytricyclo[5.2.1.0^{2,6}]dec-3-en, ist.

14. Acrylcopolymerisat nach Anspruch 12 oder 13, dadurch gekennzeichnet, daß die Dicarbonsäure und deren Anhydrid aus der Gruppe von Phthalsäure, Hexahydrophthalsäure, Tetrahydrophthalsäure, Methylhexahydrophthalsäure, 1,8-Naphthalindicarbonsäure und Maleinsäure ist.

15. Acrylcopolymerisat nach einem der vorstehenden Ansprüche, dadurch gekennzeichnet, daß der eine Carboxylgruppe enthaltende polycycloaliphatische Stoff zusätzlich eine oder mehrere aromatische Verbindungen enthält.

16. Acrylcopolymerisat nach Anspruch 15, dadurch gekennzeichnet, daß die aromatische Verbindung aus der Gruppe von aromatischen Monocarbonsäuren wie Naphthoesäure; Benzolmonocarbonsäuren wie Benzoesäure, o-Toluylsäure, m-Toluylsäure, p-Toluylsäure, Hydroxybenzoesäure, tert.-Butylbenzoesäure; aromatischen heterocyclischen Monocarbonsäuren wie Pyridincarbonsäuren, Furancarbonsäuren ist.

17. Acrylcopolymerisat nach einem der vorhergehenden Ansprüche, dadurch gekennzeichnet, daß das epoxydgruppenhaltige Copolymer erhalten worden ist durch Polymerisation einer oder meherer Verbindungen, enthaltend mindestens eine Epoxydgruppe und mindestens eine ethylenisch ungesättigte Gruppierung, mit einem oder mehreren anderen Monomeren.

18. Acrylcopolymerisat nach Anspruch 17. dadurch gekennzeichnet, daß die Verbindung, die mindestens eine Epoxydgruppe und mindestens eine ethylenisch ungesättigte Gruppierung enthält, ein Allylglycidylether oder Glycidyl(meth)acrylat ist.

19. Acrylcopolymerisat nach Anspruch 17 oder 18, dadurch gekennzeichnet, daß das andere oder die anderen Monomer(en) Alkyl(meth)acrylat(e), Styrol, Vinyltoluol, Polypropylenglykolmono(meth)acrylat, Hydroxyalkyl(meth)acrylat(e) und/oder hydroxylhaltige Umsetzungsprodukte von Hydroxyalkyl(meth)acrylaten mit Lactonen wie z.B. ε-Caprolacton sind.

20. Acrylcopolymerisat nach einem der vorhergehenden Ansprüche, dadurch gekennzeichnet, daß es zusätzlich oberflächenaktie Mittel, Rheologie-Hilfsmittel (SCA-modifizierte Acrylcopolymerisate), Verdickungs- und Thixotropierungsmittel, Beschleuniger, Lichtschutzmittel (UV-Absorber, HALS-Verbindungen), Polymerisationsinitiatoren, Vernetzungsmittel, Monocarbonsäuren und/oder weitere Bindemittel enthält.

21. Verwendung eines Acrylcopolymerisats nach einem der vorhergehenden Ansprüche als Überzugsmasse.

22. Verwendung eines Acrylcopolymerisats nach einem der vorhergehenden Ansprüche in einem Pulverlack.

23. Verwendung eines Acrylcopolymerisats nach einem der vorhergehenden Ansprüche als Klarlack, insbesondere in der Automobilindustrie.

24. Verwendung eines Acrylcopolymerisats nach einem der vorhergehenden Ansprüche als Klarlack auf Wasserbasis, insbesondere in der Automobilindustrie.

25. Verwendung eines Acrylcopolymerisats nach einem der vorhergehenden Ansprüche als Decklack, insbesondere in der Automobilindustrie.

26. Verwendung eines Acrylcopolymerisats nach einem der vorhergehenden Ansprüche zur Herstellung einer Mehrschichtlackierung, bestehend aus dem Auftrag eines pigmentierten Basislackes und Ausbildung einer Basisschicht sowie dem Auftrag eines ein Acrylcopolymerisat nach einem der Ansprüche 1 bis 20 enthaltenden Klarlackes oder eines lasierenden Decklackes im "Naß-in-naß-Verfahren" und gemeinsamer Härtung beider Lacke.

## Claims

1. An acrylic copolymer obtained by modifying an epoxy groups-containing copolymer by a carboxyl group-containing polycycloaliphatic substance having at least two cycles and a refractive index at 20 °C of at least 1.460.

2. An acrylic copolymer of claim 1 characterized in that the carboxyl group-containing polycycloaliphatic substance has at least 3 cycles.

3. Acrylic copolymer of claim 1 or 2 characterized in that the mol ratio of carboxyl group to epoxy group is from 0.5 to 1.0, preferably from 0.8 to 1.0.

4. An acrylic copolymer according to claim 1 or 2 characterized in that the mol ratio of carboxyl group to epoxy group is from 0.8 to 1.0, preferably from 0.9 to 1.0.

5. An acrylic copolymer of claim 4, characterized in that it is further reacted at elevated temperature with polycarboxylic acids and/or their anhydrides to form a semiester.

6. An acrylic copolymer of claim 5, characterized in that the reaction product of acrylic polymer and polycarboxylic acids or their anhydrides has an acid number sufficient to make the reaction product water dilutable after neutralization.

7. An acrylic copolymer of claim 6, characterized in that the water dilutable reaction product is obtained by neutralization with bases, preferably tertiary amines.

8. An acrylic copolymer of any of the preceding claims characterized in that the substance containing one carboxyl group has a refractive index at 20 °C of at least 1.480.

9. An acrylic copolymer of any of the preceding claims characterized in that the polycycloaliphatic substance containing one carboxyl group is a tricycloaliphatic monocarboxylic acid selected from the group consisting of hydrogenated natural resin acids; adamantane carboxylic acids; and tricyclomonocarboxylic acids derived from dicyclopentadiene, such as e.g. tricyclo[5.2.1.0^{2,6}]decane-8-carboxylic acid; preferably tetrahydroabietic acid.

10. An acrylic copolymer of any of the preceding claims characterized in that the one carboxyl group-containing polycycloaliphatic substance is a reaction product of at least two compounds, at least one of which being a polycycloaliphatic compound having a refractive index at 20 °C of at least 1.460, preferably of at least 1.480.

11. An acrylic copolymer of claim 10, characterized in that at least one of the polycycloaliphatic compounds which has a refractive index at 20 °C of at least 1.480 is contained to at least 10% by weight, preferably to at least 20% by weight, and in particular to at least 50% by weight, in the one carboxyl group-containing polycycloaliphatic reaction product.

12. An acrylic copolymer of claim 10 or 11, characterized in that the one carboxyl group-containing containing polycycloaliphatic substance is a reaction product of one or a mixture of alcohols with at least one dicarboxylic acid and/or its anhydride(s).

13. An acrylic copolymer of claim 12 characterized in that the alcohol is a tricycloaliphatic monoalcohol selected from the group consisting of perhydrogenated natural resins such as perhydroabietyl alcohol; dicyclopentadiene derivatives, such as e.g. 8-hydroxytricyclo[5.2.1.0^{2,6}]decane, 8-hydroxymethyltricyclo[5.2.1.0^{2,6}]decane, 8-hydroxytricyclo [5.2.1.0^{2,6}]dec-3-en, 9-hydroxytricyclo[5.2.1.0^{2,6}]dec-3-en.

14. An acrylic copolymer of claim 12 or 13_{,} characterized in that the dicarboxylic acid and its anhydride is selected from the group consisting of phthalic acid, hexahydrophthalic acid, tetrahydrophthalic acid, methylhexahydrophthalic acid, 1,8-naphthalene dicarboxylic acid and maleic acid.

15. An acrylic copolymer according to any of the preceding claims characterized in that the one carboxyl group-containing polycycloaliphatic substance additionally contains one or a mixture of aromatic compounds.

16. An acrylic copolymer of claim 15, characterized in that the aromatic compound is selected from the group consisting of aromatic monocarboxylic acids, such as naphthoic acid; benzenemonocarboxylic acids, such as benzoic acid, o-toluic acid, m-toluic acid, p-toluic acid, hydroxybenzoic acid, tert. butylbenzoic acid, aromatic heterocyclic monocarboxylic acids such as pyridinecarboxylic acids, furancarboxylic acids.

17. An acrylic copolymer of any of the preceding claims, characterized in that the epoxy groups-containing copolymer has been obtained by polymerization of one or a mixture of compounds containing at least one epoxy group and at least one ethylenic unsaturated grouping having one or a mixture of different monomers.

18. An acrylic copolymer of claim 17 characterized in that the compound containing at least one epoxy group and at least one ethylenic unsaturated grouping is an allylglycidyl ether or glycidyl(meth)acrylate.

19. An acrylic copolymer of claim 17 and 18, characterized in that the other monomer(s) are alkyl(meth)acrylate(s), styrene, vinyltoluene, polypropyleneglycolmono(meth)acrylate, hydroxyalkyl(meth)acrylate(s) and/or hydroxylcontaining reaction products of hydroxyalkyl(meth)acrylates with lactones, such as e.g. ε-caprolactam.

20. An acrylic copolymer of any of the preceding claims, characterized in that it additionally contains surfactants, rheology adjuvants (SCA-modified acrylic copolymers), thickeners agents thixotropic agents, accelerators, light stabilizers (UV absorbers, HALS compounds), polymerization initiators, cross-linking agents, monocarboxylic acids and/or further binders.

21. The use of an acrylic copolymer of any of the preceding claims as coating composition.

22. The use of an acrylic copolymer of any of the preceding claims in a powder coating.

23. The use of an acrylic copolymer of any of the preceding claims as clearcoat, in particular in the motorcar industry.

24. The use of an acrylic copolymer of any of the preceding claims as aqueous clearcoat, in particular in the motorcar industry.

25. The use of an acrylic copolymer of any of the preceding claims as basecoat in particular in the motorcar industry.

26. The use of an acrylic copolymer of any of the preceding claims for manufacturing a multilayer coating comprising applying a pigmented base coat and forming a base coating and applying a clearcoat or a transparent finishing coat containing an acrylic copolymer of any of claims 1 to 20 according to the "wet in wet" method and jointly curing the two coatings.

## Revendications

1. Copolymère acrylique, pouvant être obtenu par modification d'un copolymère contenant des groupes époxydes par une substance polycycloaliphatique contenant un groupe carboxyle et ayant au moins deux cycles et un indice de réfraction d'au moins 1,460 à 20 °C.

2. Copolymère acrylique selon la revendication 1, caractérisé en ce que la substance polycycloaliphatique contenant un groupe carboxyle comporte au moins trois cycles.

3. Copolymère acrylique selon la revendication 1 ou 2, caractérisé en ce que le rapport en moles du groupe carboxyle au groupe époxyde est compris entre 0,5 et 1,0, de préférence entre 0,8 et 1,0.

4. Copolymère acrylique selon la revendication 1 ou 2, caractérisé en ce que le rapport en moles du groupe carboxyle au groupe époxyde est compris entre 0,8 et 1,0, de préférence entre 0,9 et 1,0.

5. Copolymère acrylique selon la revendication 4, caractérisé en ce qu'il a été soumis à une réaction plus poussée à haute température avec des acides polycarboxyliques et/ou leurs anhydrides avec formation d'un semiester.

6. Copolymère acrylique selon la revendication 5, caractérisé en ce que le produit de la réaction du polymère acrylique et des acides polycarboxyliques ou de leurs anhydrides a un indice d'acide qui est suffisant pour rendre diluable à l'eau le produit de la réaction après la neutralisation.

7. Copolymère acrylique selon la revendication 6, caractérisé en ce que le produit de réaction diluable à l'eau a été obtenu par neutralisation avec des bases, de préférence des amines tertiaires.

8. Copolymère acrylique selon l'une des revendications précédentes, caractérisé en ce que la substance contenant un groupe carboxyle a un indice de réfraction à 20 °C d'au moins 1,480.

9. Copolymère acrylique selon l'une des revendications précédentes, caractérisé en ce que la substance polycycloaliphatique contenant un groupe carboxyle est un acide monocarboxylique tricycloaliphatique choisi dans le groupe des acides résiniques naturels hydrogénés, des acides adamantanecarboxyliques ; et des acides monocarboxyliques tricycliques qui dérivent du dicyclopentadiène, tels par exemple que l'acide tricyclo [5.2.1.0^{2,6} décane-8-carboxylique, de préférence l'acide tétrahydroabiétique.

10. Copolymère acrylique selon l'une des revendications précédentes, caractérisé en ce que la substance polycycloaliphatique contenant un groupe carboxyle est un produit de la réaction d'au moins deux composés, dont au moins l'un est un composé polycycloaliphatique ayant un indice de réfraction à 20 °C d'au moins 1,460, de préférence d'au moins 1,480,

11. Copolymère acrylique selon la revendication 10, caractérisé en ce qu'au moins l'un des composés polycycloaliphatiques ayant un indice de réfraction à 20 °C d'au moins 1,480 est présent en une quantité allant au moins jusqu'à 10 % en poids, de préférence jusqu'à au moins 20 % en poids et en particulier jusqu'à au moins 50 % en poids, dans le produit de réaction polycycloaliphatique contenant un groupe carboxyle.

12. Copolymère acrylique selon la revendication 10 ou 11, caractérisé en ce que la substance polycycloaliphatique contenant un groupe carboxyle est un produit de la réaction d'un ou plusieurs alcools avec au moins un acide dicarboxylique et/ou leurs anhydrides.

13. Copolymère acrylique selon la revendication 12, caractérisé en ce que l'alcool est un monoalcool tricycloaliphatique choisi clans le groupe des résines naturelles perhydrogénées tel que l'alcool perhydroabiétylique, des dérivés du dicyclopentadiène, tels par exemple que le 8-hydroxytricyclo[5.2.1.0.^{2,6}]décane, le 8-hydroxyméthyltricyclo[5.2.1.0.^{2,6}]décane, le 8-hydroxytricyclo[5.2.1.0.^{2,6}]déc3-ène, le 9-hydroxytricyclo[5.2.1.0.^{2,6}]déc-3-ène.

14. Copolymère acrylique selon la revendication 12 ou 13, caractérisé en ce que l'acide dicarboxylique et son anhydride sont choisis dans le groupe comprenant l'acide phtalique, l'acide hexahydrophtalique, l'acide tétrahydrophtalique, l'acide méthylhexahydrophtalique, l'acide 1,8naphtalénedicarboxylique et l'acide maléique.

15. Copolymère acrylique selon l'une des revendications précédentes, caractérise en ce que la substance polycycloaliphatique contenant un groupe carboxyle contient en outre un ou plusieurs composés aromatiques.

16. Copolymère acrylique selon la revendication 15, caractérisé en ce que le composé aromatique est choisi dans le groupe comprenant les acides monocarboxyliques aromatiques tels que l'acide naphtoïque ; les acides benzènemonocarboxyliques tels que l'acide benzoïque, l'acide o-toluylique, l'acide m-toluylique, l'acide p-toluylique, l'acide hydroxybenzoïque, l'acide tert-butylbenzoïque les acides monocarboxyliques hétérocycliques aromatiques tels que les acides pyridinecarboxyliques, les acides furannecarboxyliques.

17. Copolymère acrylique selon l'une des revendications précédentes, caractérisé en ce que le copolymère contenant des groupes époxy a été obtenu par polymérisation d'un ou plusieurs composés contenant au moins un groupe époxyde et au moins un groupement à insaturation éthylénique, et d'un ou plusieurs autres monomères.

18. Copolymère acrylique selon la revendication 17, caractérisé en ce que le composé contenant au moins un groupe époxyde et au moins un groupement à insaturation éthylénique est un oxyde d'allyle et de glycidyle ou un (méth)acrylate de glycidyle.

19. Copolymère acrylique selon la revendication 17 ou 18, caractérisé en ce que l'autre ou les autres monomères sont le ou les (méth)acrylates d'alkyle, le styrène, le vinyltoluène, le mono(méth)acrylate de polypropylèneglycol, le ou les (méth)acrylates d'hydroxyalkyle et/ou les produits hydroxylés de la réaction de (méth)acrylates d'hydroxyalkyle avec des lactones telles par exemple que l'ε-caprolactone.

20. Copolymère acrylique selon l'une des revendications précédentes, caractérisé en ce qu'il contient en outre des agents tensioactifs, des auxiliaires de rhéologie (copolymères acryliques modifiés par le SCA), des épaississants et des agents thixotropiques, des accélérateurs, des agents de protection contre la lumière (absorbants UV, composés HALS (stabilisants lumière à base d'une amine à empêchement stérique)), des amorceurs de polymérisation, des agents de réticulation, des acides monocarboxyliques et/ou d'autres liants.

21. Utilisation d'un copolymère acrylique selon l'une des revendications précédentes en tant que masse de revêtement.

22. Utilisation d'un copolymère acrylique selon l'une des revendications précédentes dans une peinture en poudre.

23. Utilisation d'un copolymère acrylique selon l'une des revendications précédentes en tant que vernis transparent, en particulier dans l'industrie automobile.

24. Utilisation d'un copolymère acrylique selon l'une des revendications précédentes, en tant que vernis transparent à base d'eau, en particulier dans l'industrie automobile.

25. Utilisation d'un copolymère acrylique selon l'une des revendications précédentes en tant que vernis de finition, en particulier dans l'industrie automobile.

26. Utilisation d'un copolymère acrylique selon l'une des revendications précédentes pour fabriquer une peinture multicouche, qui consiste à appliquer un vernis de base pigmenté et à réaliser une couche de base, ainsi qu'à appliquer un vernis transparent, contenant un copolymère acrylique selon l'une des revendications 1 à 20, ou encore un vernis de finition transparent par le procédé "mouillé sur mouillé", et à faire durcir ensemble les deux vernis.
